# EUROPEAN PATENT SPECIFICATION

(11) **EP 3 569 835 B1**
(45) Date of publication and mention of the grant of the patent: **20.03.2024**
(21) Application number: 19175055.3
(22) Date of filing: 17.05.2019
(51) Int. Cl.: F01N 3/20, F01N 13/04, F01N 13/00

(54) **INTERNAL COMBUSTION ENGINE AND METHOD FOR REDUCING NITROGEN OXIDE EMISSIONS**
VERBRENNUNGSMOTOR UND VERFAHREN ZUR REDUZIERUNG VON STICKOXIDEMISSIONEN
MOTEUR À COMBUSTION INTERNE ET PROCÉDÉ POUR RÉDUIRE LES ÉMISSIONS D'OXYDE D'AZOTE

(30) Priority: 18.05.2018 EP 18173078
(43) Date of publication of application: 20.11.2019
(73) Proprietor: Winterthur Gas & Diesel Ltd., 8401 Winterthur (CH)
(72) Inventor: Plüss, Alain, 8400 Winterthur (CH); Kadau, Dirk, 8046 Zürich (CH); Brutsche, Martin, 8418 Schlatt (CH); Stark, Matthias, 8400 Winterthur (CH)
(74) Representative: Hepp Wenger Ryffel AG

(56) References cited:
- EP-A1- 2 055 909
- EP-B1- 2 055 909
- WO-A1-02/075124
- WO-A1-2007/010664
- WO-A1-2012/051273
- US-A1- 2010 199 643
- US-A1- 2012 023 907

## Description

The present invention relates to an internal combustion engine and a method for reducing nitrogen oxide emissions according to the preamble of the independent claims.

The invention relates to the technical field of combustion engines and the reduction of their emissions.

For large ships the emissions requirements have been increasing, in particular with regard the nitrogen oxide emissions. Thus, there is a need to reduce the amount of nitrogen oxides in the exhaust gas emitted by the internal combustion engines of these ships.

The use of reactors for a selective catalytic reduction (SCR) in these combustion engines is known. One problem of the known reactors in combustion engines is that at low loads, the selective catalytic reduction does not reduce the emitted nitrogen oxides sufficiently. Further the known SCR reactors are inflexible and only adapted for a high nitrogen reduction at high loads (e.g. to achieve tier III requirements).

DK 2015 70704 discloses a two-stroke internal combustion engine with a plurality of cylinders having combustion chambers and an exhaust gas system. The exhaust gas system comprises an exhaust gas receiver, for receiving exhaust gas from the plurality of cylinders and at least one SCR reactor located downstream of the exhaust gas receiver. Due to too low temperatures, sulfuric acid is neutralized by ammonia and forms a sticky product called ABS, which deposits on the catalyst material in the SCR reactor. In order to regenerate the SCR reactor, DK 2015 70704 proposes to deliver exhaust gas at a higher temperature from one cylinder. This high temperature exhaust gas is supplied through a regeneration path to the SCR reactor for a limited time. The cylinder from which the high temperature gas is removed has a lower power output. The engine has the disadvantage that an engine governor has to compensate for the lower power output. Further, the proposed engine is not adapted for NOx reduction at low loads.

DE 10 2008 058 612 discloses a method for the reduction of nitrogen oxides in exhaust gases. The apparatus includes a separation of the exhaust gas into a first part which is recirculated and a second part which is directed to a turbine. The part that is recirculated is directed into the combustion chamber and nitrogen oxide emissions are reduced. A reduction of nitrogen oxides with an SCR is not shown.

WO2012/0151273 A discloses an exhaust gas after treatment system allowing for independent control of exhaust gas flow through plural exhaust legs. Valves can be adjusted to provide and control a balanced or imbalanced state of flow through the exhaust legs.

EP 2055909 A1 discloses a combustion engine wherein exhaust gas is guided to a catalyzing unit in a stoichiometric operation partly by a bypass arranged in parallel to an emission reduction device.

US201200023907 A1 discloses a system for storing NH₃ slipped through a first SCR in a second SCR, located in parallel to the first SCR.

WO02/075124 A1 relates to a device for dividing an incoming gaseous stream into two substreams, each respective stream passing through one branch of a conduit system.

WO2007/010664 A1 discloses an exhaust gas after treatment system comprising two pipes branched from the exhaust pipe positioned in the exhaust upstream. There are respectively disposed plural oxidation catalysts differing from each other in the capacity of oxidation of NO to NO₂.

US 2010/0199643 A1 discloses an exhaust gas purification system or exhaust gases from an internal combustion engine. In order to achieve higher efficiency in nitrogen conversion the inlet line is divided downstream by the metering device into two catalyst lines which lead the exhaust gas stream from the internal combustion engine in each case to a catalyst element.

The problem of the invention is to reduce nitrogen oxides in the exhaust gas of an internal combustion engine at low engine loads. A further, particular problem of the invention is to provide a flexible and efficient reduction of nitrogen oxides for different engine loads.

According to a first aspect of the invention an internal combustion engine according to independent claim 1 is provided.

Full load may be the operating condition of the internal combustion engine at which the internal combustion engine provides a maximal power or torque. If a reduction of an energy supply results in a lower power or torque, this operating condition is called partial load. Full load may be the CMCR (contract maximum continuous rating) point of the engine. In one embodiment, the full load (e.g. CMCR) is calculated by using a desired vessel speed, a desired power and optionally a desired propeller speed. The separation device is configured to separate the exhaust gas into two streams. Since only a part of the exhaust gas is directed to the first SCR, a smaller SCR reactor may be chosen. Large SCR reactors dispose significant restrictions on the construction of engines. Large SCRs are expensive, difficult to integrate in the engine, and result in a loss of fuel efficiency. Since only a part of the exhaust gases are guided through the SCR, space and cost may be saved.

In two-stroke engines charge air is compressed, a fuel is injected and the mixture is combusted in the cylinder. The gas mixture resulting from the combustion in the cylinder is called "combustion gas" in the following. The combustion gas may also comprise particulate matter.

Scavenge air is used to eject the combustion gas from the combustion chamber through the outlet. The combination of scavenge air and combustion gas is ejected through the outlet of the cylinder and collectively called "exhaust gas".

Due to the scavenging the hot combustion gas from the cylinder is pushed through the outlet with the colder scavenging air.

During the scavenging the scavenge air and the combustion gas mix. Nevertheless, the exhaust gas has a temperature gradient because during the discharge phase a concentration of the combustion gas is initially higher and drops over time.

In other words, the gas guided through the outlet can be separated in a first part of the exhaust gas being relatively hot (i.e. mostly combustion gas) and a second part of the exhaust gas (i.e. mostly scavenging air), which is relatively cold. The first part of the exhaust gas includes a major part of the nitrogen oxides.

The engine may comprise a turbocharger. The turbocharger may be arranged in the first and/or second component exhaust line. The turbocharger may be arranged downstream of the first and/or second SCR. In an alternative embodiment, the turbocharger may be arranged upstream of the second SCR.

The separation device could also be formed by two or more valves arranged before the exhaust gas receiver. Preferably, the separation device comprises at least one, in particular two, valves per combustions chamber. The valve(s) may be butterfly valve(s) or poppet valve(s) or any other suitable valve(s). The separation device can also be arranged after the exhaust gas receiver but before the turbocharger or after the turbocharger. The separation device is formed by multiple valves.

In one embodiment, the separation device comprises a controllable valve for opening and closing the first component exhaust line for separating the exhaust gas into the first and second component exhaust stream. The controllable valve may be controlled by a controller. The controller may be mechanical, i.e. a camshaft of the engine, or electronical.

The separation device may be configured to separate the exhaust gas from the combustion chambers into a first and a second gas stream, respectively, for the first and second component exhaust line, wherein the gas streams are discharged sequentially, or at the same time.

The different embodiments of a separation device provide a simple and reliable separation of the first and second exhaust gas stream. According to the invention, it allows separating a part of the exhaust gas discharged first with, relatively more combustion gas and thus a higher temperature from a part discharged later with, relatively, more scavenging air and a lower temperature. In one embodiment, the controllable valve is first opened during a discharge phase of the combustion chamber and then later closed, when the scavenging air flows through the outlet. One embodiment of such a separation device is shown in the European patent application EP 2 151 569 A1. The separation device is configured to separate the exhaust gas from the combustion chamber into a first relatively hot gas stream and a second relatively cold gas stream. Preferably the relatively hot gas stream is for the first component exhaust line. Preferably, the relatively cold gas stream is for the second component exhaust line.

In other words the separation device is configured to separate the exhaust gas from the combustion chamber into a first gas stream for the first component exhaust line and a second gas stream for the second component exhaust line, wherein the temperature of the second gas stream is lower than the temperature of the first gas stream.

The separation device separates the first gas stream by timing an opening and closing of the valves for the first component and second component exhaust lines. In one embodiment, the separation device is configured to guide a first part, which is expelled first from the outlet through the first component exhaust line and a second part which is expelled thereafter through the second component exhaust line.

The separation device is configured for setting the valves allowing a flow into the first component exhaust line and the second component exhaust line, dependent on the temperature of the exhaust gas in the cylinders, the crank angle, a time, or a pressure in the cylinders.

Typically, during a first phase of exhaust gas discharge the temperature of the exhaust gas quickly rises to a maximum and then slowly decreases, as does the pressure in the cylinder.

During a second phase, starting from a specific point of time tₛ or a specific crank angle αₛ, when the scavenging air has entered the cylinder, the pressure in the cylinder is below a specific pressure pₛ and the temperature of the discharged exhaust gas has a temperature which is below a specific temperature Tₛ. The temperature of the exhaust gas for example may drop below 350°C, in particular below 250°C during that second phase.

The combustion engine may comprise a sensor for detecting a value that allows conclusions to be drawn about the temperature of the exhaust gas in the cylinders, such as a temperature sensor, a pressure sensor, a time sensor or a crank angle sensor. The sensor preferably is a fast reacting, high speed and/or fast measuring sensor, such that the measured values and changes of the measured values are detected sufficiently fast during the combustion cycle. A fast measurement allows an ongoing comparison with a predetermined critical value and/or a timely change of the setting of the separation device.

The value may be compared with a predetermined specific value. If the specific value is reached, the separation device may be brought into a new condition, for example from a first condition wherein exhaust gas is guided into the first component exhaust line and not into the second component exhaust line to a second condition wherein exhaust gas is guided into the second component exhaust line and not into the first component exhaust line.

The combustion engine comprises a control unit for operating the separation device, namely for setting the valves, in particular depending on a measurement of the sensor and/or on the temperature or a value that allows conclusions to be drawn about the temperature of the exhaust gas, such as the pressure the time or the crank angle.

As soon as a specific value, for example a specific temperature Tₛ, a specific pressure pₛ, a specific point of time tₛ or a specific crank angle αₛ is reached, the control unit may change the setting of the separation device.

The specific values are predetermined and may be provided to or may be stored in the control device.

The specific values may depend on the load. A map with load dependent specific values may be deposited to be used by the control unit.

The control unit for setting the separation device, in particular the valves, may be configured to operate the separation device depending on the load. For a predetermined load range, the control unit may set the separation device as described above. Additionally or alternatively there may be predetermined load ranges for which either only a first gas stream for the first component exhaust line or only a second gas stream for the second component exhaust line or a first and a second gas stream for the first and second component exhaust lines at the same time are allowed.

At low engine loads ammonium bisulfate (ABS) may form and deposit on the catalyst material in the SCR reactor. This is caused by too low temperatures in the exhaust gas. The deposition of ABS in the SCR reactor is avoided by separating the gas stream into two streams. Since one stream is relatively hot, only high temperature gases are guided to the SCR reactor and ABS formation is prevented. Preferably a device for injecting a reducing agent, such as a urea solution, is arranged upstream the first SCR reactor.

The engine may comprise an exhaust gas recirculation (EGR). The EGR may be connected to an inlet of the internal combustion chamber and an outlet of the internal combustion chamber.

The engine comprises an exhaust gas receiver for collecting the exhaust gas of the cylinders. The separation device may be arranged upstream of the exhaust gas receiver. Thereby, the exhaust gas may be separated before the components (e.g. combustion gas and scavenge air) of the exhaust gas stream are homogenously mixed in the exhaust gas receiver.

The exhaust gas receiver may be arranged in the second component exhaust line.

The separation device may be arranged downstream of the exhaust gas receiver.

In one preferred embodiment, at least one, preferably each, separation device comprises multiple valves. The separation device may comprise two or four valves. In one embodiment two of four valves are used for diverting the first component exhaust stream into the second component exhaust line. The other two valves are used for diverting the second component exhaust gas stream into the second component exhaust line.

In a further preferred embodiment one of three or four or more valves is adapted to divert a first part of the exhaust gas into the first component exhaust stream. The other two or three or more valves are adapted to divert the exhaust gas into the second component exhaust line. Thereby, the first and second component exhaust streams may be generated particularly simply and efficiently.

In one embodiment, the separation devices are formed by the outlet valves of each of the at least two cylinders. In one example, each cylinder may comprise multiple outlet valves. A first outlet valve of each cylinder is adapted to open the first component exhaust line and the second outlet valve is adapted to open the second component exhaust line. In a further example, each cylinder comprises two valves for each component exhaust line. Still further, each outlet may comprise four outlet valves. In these preferred embodiments, the separation device is formed by the outlet valves, providing a compact device.

Additionally or alternatively, the separation device may include one or two or four or more valves, e.g. butterfly valves downstream of the outlet or the outlet valves.

In one embodiment, the engine comprises a second SCR reactor, which is arranged in the second component exhaust line. The second component exhaust line may be arranged downstream of the exhaust gas receiver.

Preferably a device for injecting a reducing agent, such as a urea solution, is arranged upstream the second SCR reactor.

The second SCR may have a greater maximum capacity than the first SCR. The second SCR may have a maximum capacity of at least 80% or 100% of the full load outflow rate of the at least two cylinders. Thereby, and efficient nitrogen oxide reduction at high engine loads is provided. Additionally, the provision of two SCR allows a flexible and efficient use of the SCRs. For example, at a low load, e.g. when a ship is going at a low velocity, only the first (small) SCR may be used. At higher loads, the second SCR may be added if a high reduction of nitrogen oxides is needed.

In one embodiment, a first inlet for a reducing agent is arranged in the first component exhaust line. The first inlet may be arranged downstream of the separation device and/or the first inlet may be arranged upstream of the first SCR reactor. The reducing agent may be urea or ammonia.

In a further embodiment, a second inlet for a reducing agent is arranged in the second component exhaust line. The second inlet may be arranged downstream of the separation device and/or the second inlet may be arranged upstream of the second SCR reactor. The reducing agent may be urea or ammonia.

The first and second inlet may inject the same reducing agent (i.e. ammonia or urea). In a preferred embodiment, the first and second inlets inject different reducing agents. In one example, the first inlet may inject urea and the second inlet may inject ammonia. Urea requires an endothermic reaction to ammonia. Since ammonia does not need to react, it is particularly suited as reducing agent at low exhaust gas temperatures.

In one embodiment, the second component exhaust line comprises an SCR pipe and a bypass pipe, preferably in parallel. The second SCR may be arranged in the SCR pipe. The second component exhaust line comprises at least one, preferably two, valves for guiding the exhaust gas into the SCR and/or the bypass pipe. Further, the engine may comprise a controller adapted to actuate the valves such that the exhaust gas is directed to the second SCR or through the bypass pipe or through both.

The bypass pipe allows a fuel-efficient operation mode of the engine. Thus, depending on the desired operation mode, i.e. fuel-efficient or emission reduced at high/low loads, an operator can select through which pipes/component exhaust lines the exhaust gases are directed. Examples for operation modes are described with regard to the shown embodiments of the invention. In one embodiment, the first component exhaust line comprises a heating element disposed upstream of the first SCR reactor. Additionally or alternatively, a further heating element may be disposed upstream of the second SCR. In certain operation modes, in particular at low loads, the exhaust gases may be too cold, which results in the deposition of ammonium bisulfate (ABS) onto the catalyst of the first and/or second SCR reactor. In order to prevent this and in order to avoid having to use a recirculation of gases from selected cylinders, the respective SCR reactor itself may comprise a heating device to heat the exhaust gas to a sufficient temperature.

A sufficient temperature (minimum continuous operating temperature) may be calculated from the absolute pressure in the exhaust gas and sulfur concentration in the fuel.

For example, for an absolute pressure of 1 bar and a concentration of 0.1% sulfur, the minimum temperature may be 280°C (rounded). Preferably the minimum temperature is 30° higher than the sufficient temperature Tₛᵤ, i.e. 310°C for 1 bar and 0.1 % sulfur.

In particular, for 1.5 bar, the temperature is above 290°C, preferably above 320°C for 0.1% sulfur. For 0.5% sulfur, at 1.5 bar, the temperature may be above 310°C, preferably above 340°C. For 3.5% sulfur (and also 1.5 bar) the temperature may be above 340°C, preferably above 370°C.

A further aspect of the invention relates to a method according to independent claim 10.

The first exhaust gas stream may be discharged during a first phase of the combustion cycle and the second exhaust gas stream may be discharged during a first phase of the combustion cycle. The first exhaust gas stream has a first temperature and the second exhaust gas stream has a second temperature, wherein the second temperature is lower than the first temperature.

In a preferred embodiment of the method, the method additionally comprises the step of heating the first exhaust gas stream upstream of the first SCR reactor.

In a preferred embodiment, a part discharged first from the internal combustion chambers is guided into the first component exhaust line and a part discharged thereafter is guided into the second component exhaust line. Typically, the part discharged first has a higher temperature than the part discharged later (second part). Thereby, a simple method of separating the exhaust gas into a relatively hot and relatively cold exhaust stream is provided.

The internal combustion engine may comprise a fresh air feed for guiding fresh air through a scavenge air receiver and through flushing holes, also called scavenge ports or inlet ports, into the cylinder. The fresh air may be used to flush out the combustion gas out of the cylinder at the end of the combustion cycle. During the combustion cycle there is a first phase, when mainly combustion gas is discharged and a second phase wherein a mixture of combustion gas and fresh scavenge air is discharged. The exhaust gas discharged during the first phase may be guided in the first component exhaust line as a first gas stream. The exhaust gas discharged during the second phase may be guided in the second component exhaust line as a second gas stream.

The first gas stream comprising mainly combustion gas usually has a temperature which is higher than the temperature of the exhaust gas mixture, comprising combustion gas and fresh scavenge air, which is regularly discharged from the cylinder. Furthermore, the exhaust gas discharged during the first phase has a high NOₓ content. The second gas stream, as it comprises a mixture of combustion air and fresh air, usually has a lower NOₓ content than the first gas stream.

The percentage of combustion gas and/or the NOₓ content in the second gas stream may be so low, that it is not necessary to guide the second gas stream through a SCR-reactor.

In a preferred embodiment, the first exhaust gas stream is relatively hot and the second exhaust gas stream is relatively cold. As mentioned herein, relatively hot is compared to the other exhaust gas stream. For example, a first exhaust gas stream that is relatively hot means that it is hotter than the second exhaust gas stream.

In a preferred embodiment, the method additionally comprises the step of injecting a reductant into the first and/or second exhaust gas stream upstream of the first and/or a second SCR reactor in the second exhaust gas stream.

In a preferred embodiment, the method additionally comprises the step of guiding the second exhaust gas component stream through the second component exhaust line to a second SCR reactor and reacting the second exhaust gas component stream in the second SCR reactor, such that a concentration of nitrogen oxides in the second exhaust gas component stream is reduced.

In a preferred embodiment the method additionally includes the step of guiding the second exhaust gas stream partially or entirely through a bypass pipe without reacting the second component gas stream partially or entirely. In a preferred embodiment, the second exhaust gas stream and/or the first exhaust gas stream is directed to a turbocharger.

In one embodiment, the first and/or second stream is guided parallel to the turbocharger.

Non-limiting embodiments of the invention are described, by way of example only, with respect to the accompanying drawings, in which:
- Figure 1:: shows a schematic drawing of a first embodiment according to the present invention,
- Figure 2:: shows a schematic drawing of a second embodiment according to the present invention,
- Figure 3:: shows an example of an engine

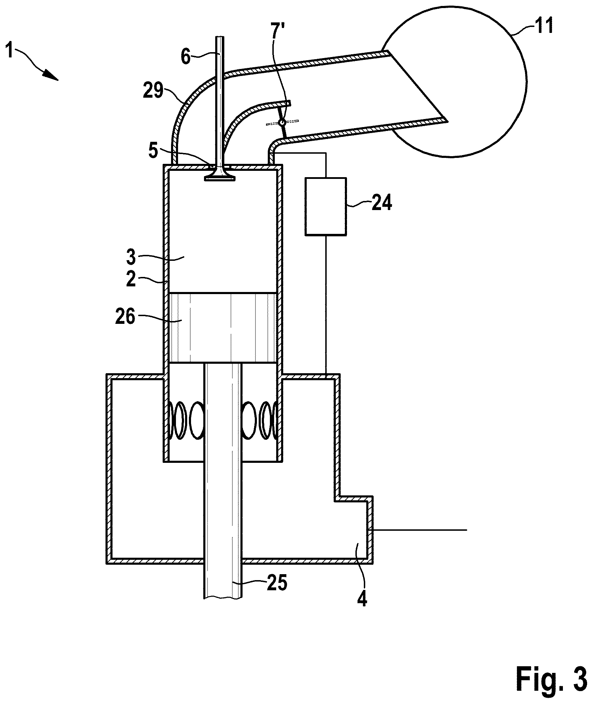

Figure 3 shows an internal combustion engine not according to the invention. The internal combustion engine 1 comprises a cylinder 2 with a combustion chamber 3. Inside the combustion chamber 3, a piston 26 with a piston rod 25 is provided. Fuel is guided through a fuel inlet (not shown) into the combustion chamber 3 and burned in the combustion chamber 3. The combustion gas is guided through an outlet 5 which comprises a single outlet valve 6. The combustion gas is scavenged with scavenge air. After the outlet valve 6 the combustion gas and the scavenge air (collectively exhaust gas) are guided through an outlet pipe 29.

The outlet pipe 29 comprises two channels. A first channel is used for directing a part of the exhaust gas through an EGR pipe with an EGR cleaner 24 with a butterfly valve 7'. When the butterfly valve 7' is closed, the exhaust gas in the first channel is guided through the EGR. When the butterfly valve 7' is in an open position, the first channel guides its exhaust gas to an exhaust receiver 11. The second channel is used for guiding the rest of the exhaust gas to the exhaust gas receiver 11.

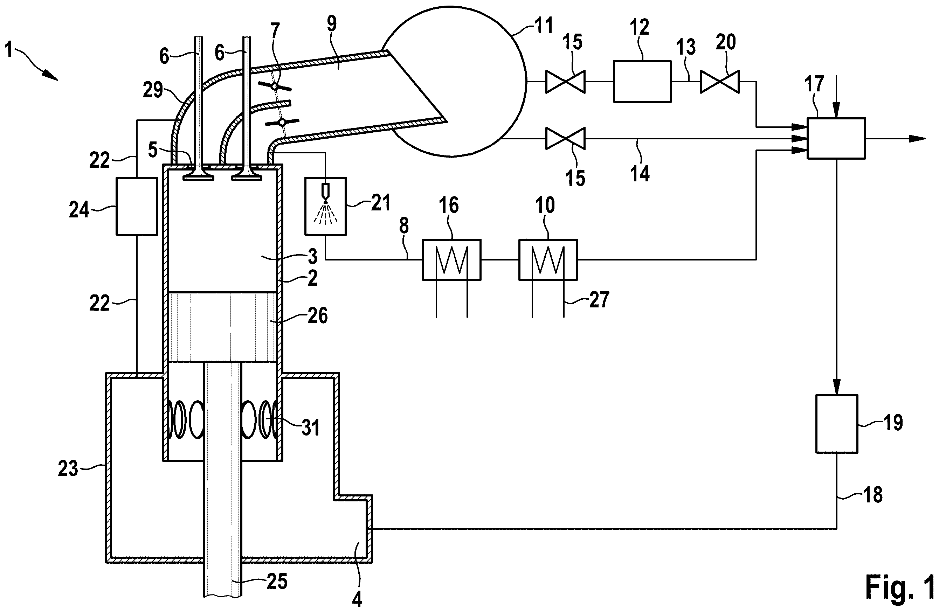

Figure 1 shows a schematic drawing of a first embodiment of a two-stroke, cross-head internal combustion engine 1. The engine 1 comprises the parts of the engine of figure 3.

In addition, a separation device 7 is arranged in the outlet pipe 29. The separation device 7 comprises two valves which open and close the two channels of the outlet pipe 29.

A first component exhaust line 8 is connected to the outlet pipe 29. The connected first component exhaust line 8 guides a part of the exhaust gas through the outlet 5 to a first SCR reactor 10. The first SCR reactor 10 reduces nitrogen oxides in the exhaust gas with a selective catalytic reduction. Examples of catalysts used in such SCR reactors are titanium dioxide, stabilized with oxides of base metals such as vanadium and tungsten. The catalyst can be extruded from a mixture of titanium dioxide, vanadium and tungsten.

Alternatively, cordierites with a wash coat made of titanium dioxide, vanadium and tungsten may be used. Further alternatively, a metallic base may be coated with the mentioned wash coat.

In another embodiment, metal zeolites such as copper or iron zeolites could be used as catalyst.

The reduction of nitrogen oxides is based on a reaction of the nitrogen oxides with ammonia. Ammonia is generated by injecting urea with a urea injector 21 upstream of the first SCR reactor 10. Only a part of the exhaust gas of the cylinder 2 is guided through the first component exhaust line 8. The exhaust gas guided through line 8 may have a temperature which is too low for the selective catalytic reaction. At low temperatures (such as below 290°C at 1.5 bar and 0.1% sulfur) sulfuric acid is neutralized by ammonia and forms sticky product ammonia bisulfate (ABS). ABS may deposit on the catalyst material of the SCR reactor. In order to avoid this, the line 8 may additionally comprise a heating element 16, which is disposed upstream of the first SCR reactor and may be disposed downstream of the urea injector 21.

In the two-stroke engine 1, scavenge air is used during the exhaust phase to discharge a combustion gas from the combustion chamber 3. Hence, the exhaust gas comprises scavenge air as well as combustion gas. The combustion gas has a higher temperature than the scavenge air due to the combustion. Further, a concentration of nitrogen oxides is higher in the combustion gas than in the scavenge air.

If the combustion gas and the scavenge air are mixed, as for example, in an exhaust gas receiver 11, such as an exhaust gas manifold, the temperature of the combustion gas is reduced. At low loads, this temperature is particularly low, because a fuel injection is small, an amount of combustion gas is low and an SCR reactor cannot operate properly.

Thus, the combustion gas is separated from the scavenge air at the outlet 5 of the cylinder 2 at low loads. A first method of separating is closing a first valve of separation device 7 for the first component exhaust line 8 and closing a second valve of separation device 7 for the second component exhaust line 9. In this configuration, the exhaust gas is entirely guided through the first component exhaust line 8. At higher loads, both valves, for example butterfly valves, of separation device 7 are open and a majority of the exhaust gas is guided through the second component exhaust line 9.

Differing from the engine shown in figure 3, the engine shown in figure 1 comprises two outlet valves 6 for the combustion chamber 3. Even though two outlet valves are shown, preferably one or four valves are used. The outlet valves 6 are used to guide the exhaust gas. First, while combustion gas is expelled, the outlet valve for the first component exhaust line 8 is open while the outlet valve for the second component exhaust line 9 is closed. In this configuration, the exhaust gas is guided through the first component exhaust line 8. This may be supported by closing both butterfly valves of separation device 7. As soon as the scavenge air arrives at the outlet 5, the outlet valve 6 for the first component exhaust line 8 is closed and the outlet valve of the second component exhaust line 9 is opened.

Thereby, the separated part is guided through the first component exhaust line 8, which allows a reliable reduction of nitrogen oxides in the first SCR reactor 10. In addition, since only a part of the exhaust gas is guided through line 8, a small SCR may be used. An SCR reactor 10 with a maximum capacity of 40% of a full load outflow rate is sufficient, which saves space. The SCR reactor 10 may comprise a reactor heater 27 to adjust the temperature in the reactor further.

The second component exhaust line 9 leads to the exhaust gas receiver 11. From the exhaust gas receiver 11, the exhaust gas is let through an SCR pipe 13 or a bypass pipe 14. The SCR pipe 13 and the bypass pipe 14 each comprise valves 15. The valves 15 can be opened and closed independently such that the bypass pipe 14 and/or the SCR pipe 13 are used. The SCR pipe 13 comprises a second SCR reactor 12. The second SCR reactor 12 is adapted for higher throughputs than the first SCR reactor 10. The second SCR reactor 12 has a maximum capacity of at least 60% of the full load outflow rate of the cylinders 2.

An urea injector is arranged upstream of the second SCR reactor 12.

In one embodiment, the second SCR reactor 12 and the first SCR reactor 10 may have a combined total capacity of at least 100% of the full load outflow rate of the at least two cylinders. The bypass pipe may not comprise an SCR.

In addition, the SCR pipe 13 comprises a second valve 20 downstream of the SCR reactor 12. The valve 20 prevents a backflow into the SCR pipe 13.

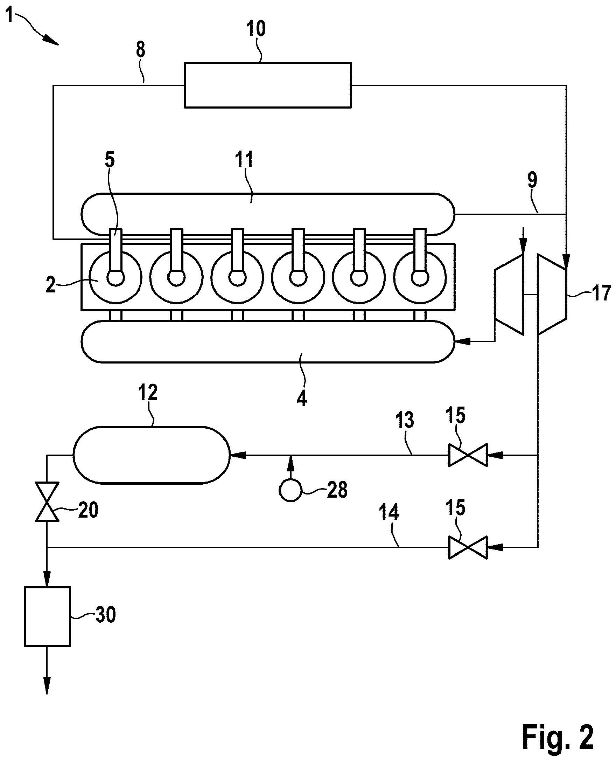

The first line 8 and the second line 9 (i.e. the bypass pipe 14 and the SCR pipe 13) lead to a turbocharger 17 and to a funnel 30 (see figure 2) thereafter. The turbocharger 17 draws fresh air with the energy stored in the exhaust gas. The fresh air drawn by the turbocharger 17 is guided through a cooler system 19 and a fresh air feeder 18 to the inlet 4. After the inlet 4, the fresh air is guided through a scavenge air receiver 23 and through flushing holes 31 into the cylinder 2.

Additionally to the nitrogen oxide reduction within the SCR reactors 10, 12, emissions such as particles and sulfuric acids are reduced with an EGR cleaner 24. An EGR pipe 22 is connected to the outlet 5 of the cylinder 2. The EGR pipe 22 leads exhaust gas to the EGR cleaner 24 and after the EGR cleaner 24 into the combustion chamber 3. The EGR cleaner 24 may comprise a scrubber, a cooler and a water mist catcher.

The engine 1 as shown in figure 1 allows four different operational modes:
A first operational mode is particularly suited for low loads and allows a fulfillment of tier III requirements. At low loads, the valves 15 and the separation device 7 are set such that the first component exhaust line 8 and the bypass pipe 14 are open. The SCR pipe 13 is closed. A first part of the exhaust gas which comprises combustion gas is guided through the first SCR reactor 10, where nitrogen oxides are reduced. The rest of the exhaust gas, which mainly comprises scavenge air, is guided through the bypass pipe 14. Alternatively, it is also possible to guide the first part of the exhaust comprising mainly combustion gas through SCR pipe 13 and second SCR reactor 12 while the rest of the exhaust gas, which mainly comprises scavenge air, is guided through first component exhaust line 8. In this case first SCR reactor 10 is not working and valve 15 of SCR bypass pipe 14 is closed. In particular, SCR reactor 10 can also be bypassed by a separated bypass line (not shown).

In a second operational mode, the exhaust gas is guided through the second exhaust line 9 only and no exhaust gas is guided through the first exhaust line 8. In a variant of the second operational mode, the exhaust gas is only guided through the SCR pipe 13 and the second SCR reactor 12. The second operational mode corresponds to the SCR reactors in engine as known in the prior art.

A third operational mode is particularly suited for high loads when a high nitrogen oxide reduction is desired (tier III). In the third operational mode the first and second component exhaust lines 8, 9 are both open. In the third operational mode, the bypass pipe 14 is closed and the SCR pipe 13 is open. The first and second SCR reactor 10, 12 are run in parallel. At high loads, the scavenge air is sufficiently hot such that a reliable nitrogen oxide reduction becomes possible in the second SCR reactor 12.

The first small SCR reactor 10 is particularly efficient in this operational mode, since the heater 16 may be switched off, because the combustion gas of the exhaust gas is sufficiently hot for the nitrogen oxide reaction without additional heating. Further, the first small SCR reactor 10 allows a higher reduction of nitrogen oxides because the nitrogen oxides have a higher concentration in the parts directed to the first SCR reactor 10.

Since the exhaust gas guided through the second exhaust line 9 is also treated, higher total NOX reductions are possible.

In both the first and the second mode, in which only one SCR is employed, the relative NOx reduction preferably is above the required Tier III level to ensure meeting Tier III criteria after mixing with the non-reduced part of the exhaust.

In a fourth operational mode, the exhaust gas is guided through the bypass pipe 14 only and the first component exhaust line 8 as well as the SCR pipe 13 are closed. In this operational mode, the SCRs 10 and 12 are switched off. The fourth operational mode is particularly fuel efficient.

Figure 2 shows a second embodiment of an internal combustion engine 1. The second embodiment of the engine 1 is similar to the first embodiment. As a result the reference signs refer to similar features. However, in contrast to the first embodiment, the SCR pipe 13 with the second SCR reactor 12 and the bypass pipe 14 are arranged downstream of the turbocharger 17.

Engine 1 comprises cylinders 2. At the outlet of the cylinders 2, and exhaust gas from the cylinders 2 is separated into a first and a second stream. The first stream is guided through a first component exhaust line 8 and the second stream is guided through a second component exhaust line 9. The second component exhaust line 9 comprises the exhaust gas receiver 11. The first component exhaust line 8 is composed as shown with reference to figure 1, comprises the first SCR reactor 10 and is parallel to the exhaust gas receiver 11. After the first SCR reactor 10 and before the second SCR reactor 12 and the bypass pipe 14, the first component exhaust line 8 merges into the second line 9 and the entire exhaust gas of all cylinders 2 is guided through the turbocharger 17.

After the turbocharger 17 the second component exhaust line 9 allows the exhaust gas to be directed into the second SCR reactor 12 through the SCR pipe 13 or through the bypass pipe 14. Thereafter, the exhaust gas may be released through a funnel 30. In a variation the second SCR reactor 12 and the bypass pipe 14 may be arranged upstream of the turbocharger 17.

The operational modes outlined above regarding figure 1 can also be used in the embodiment shown in figure 2.

## Claims

1. Internal combustion engine, preferably a two-stroke engine (1), in particular for a propulsion system, comprising: at least two cylinders (2), each comprising a combustion chamber (3) having an inlet for a fuel and an outlet (5) for an exhaust gas with an outlet valve (6), an exhaust gas receiver (11) for collecting the exhaust gas of the cylinders (2), wherein the engine comprises at least one separation device (7) downstream of the combustion chambers (3), the separation device (7) being formed by multiple valves, the separation device (7) being arranged before or after an exhaust gas receiver, wherein the engine comprises a control unit configured for operating the separation device (7), namely for setting the valves, wherein a first component exhaust line (8) and a second component exhaust line (9) are connected to the at least one separation device (7), wherein the at least one separation device (7) is configured to separate the exhaust gas from the combustion chambers (3) into two streams, namely a first gas stream for the first component exhaust line (8) and a second gas stream for the second component exhaust line (9) and wherein a first SCR-reactor (10) is arranged in the first component exhaust line (8) downstream of the separation device (7) the second component exhaust line and the first component exhaust lines (8,9) are separate from each other at least until the first SCR reactor (10), **characterized in that,** the first SCR reactor (10) has a maximal capacity of 80% or less, preferably 60% or 50% or less, of a full load outflow rate of the at least two cylinders (2), and wherein while during a discharge phase the exhaust gas has a temperature gradient because a concentration of the combustion gas is initially higher and drops over time, and while a first exhaust gas stream discharged during a first phase of the combustion cycle has a first temperature and a second exhaust gas stream discharged during the first phase of the combustion cycle has a second temperature, which is lower than the first temperature,
the separation device (7) is configured to separate a part of the exhaust gas discharged first with relatively more combustion gas and thus a higher temperature from a part discharged later with relatively more scavenging air and a lower temperature, , wherein the separation device (7) is configured to separate the first gas stream by timing an opening and closing of the valves for the first component and second component exhaust lines (8, 9), dependent on a temperature of the exhaust gas in the cylinders (2), a crank angle, a time, or a pressure in the cylinders (2).

2. Internal combustion engine according to the preceding claim, **characterized in that**, the separation device (7) comprises a controllable valve, in particular a butterfly valve, for opening and closing the first component exhaust line for separating the exhaust gas into the first and second component exhaust stream.

3. Internal combustion engine according to one of the preceding claims, **characterized in that** the at least one separation device (7) is arranged upstream of the exhaust gas receiver (11) .

4. Internal combustion engine according to claim 3, **characterized in that**, the separation devices (7), are formed by the outlet valve of each of the at least two cylinders (2).

5. Internal combustion engine according to one of the preceding claims, **characterized in that**, the engine (1) comprises a second SCR-reactor (12), which is arranged in the second component exhaust line (9), preferably downstream of the exhaust gas receiver (11).

6. Internal combustion engine according to claim 5 **characterized in that**, the second SCR (12) has a greater maximal capacity than the first SCR (10), preferably at least 80% of the full load outflow rate of the at least two cylinders (2) .

7. Internal combustion engine according to one of the preceding claims, **characterized in that**, the second component exhaust line comprises an SCR pipe (13) and a bypass pipe (14), wherein the second SCR (12) is arranged in the SCR pipe and wherein the second component exhaust line comprises at least one, preferably two, valves (15) for guiding the exhaust gas into the second SCR (12) and/or the bypass pipe (14) .

8. Internal combustion engine according to one of the preceding claims, **characterized in that**, the first component exhaust line (8) comprises a heating element (16) disposed upstream of the first and/or second SCR-reactor (10,12).

9. Internal combustion engine according to one of the preceding claims, wherein a device for injecting a reducing agent, such as a urea solution, is arranged upstream the first SCR reactor and/or the second SCR reactor.

10. Method for reducing NOₓ emissions of an internal combustion engine, preferably a combustion engine according to any one of the claims 1 to 9, comprising the steps of:
- Burning a fuel in at least two cylinders (2) having an internal combustion chamber (3) with an inlet for a fuel and an outlet (5) for an exhaust gas with an outlet valve (6)
- Discharging exhaust gas through the outlet (5)
- Separating the exhaust gas of all combustion chambers (3) downstream of the combustion chambers (3) into a first and a second exhaust gas stream with a separation device (7), being formed by multiple valves arranged before or after an exhaust gas receiver, wherein the first exhaust gas stream is transported by a first component exhaust line (8), and the second exhaust gas stream is transported by a second component exhaust line (9), and wherein both exhaust lines (8,9) are connected to the at least one separation device (7) by timing an opening and closing of the valves for the first component and second component exhaust lines (8, 9), dependent on the temperature of the exhaust gas in the cylinders (2), the crank angle, a time, or a pressure in the cylinders (2),
- Guiding the first exhaust gas stream in the first component exhaust line (8) to a first SCR-reactor (10) with a maximal capacity of 80% or less, preferably 60% or 50% or less, of a full load outflow rate of the at least two cylinders,
- Guiding the second exhaust gas stream in the second component exhaust line (9), wherein the first and the second exhaust lines are kept separate at least until the first SCR-reactor (10), wherein the first exhaust gas stream has a first temperature and the second exhaust gas stream has a second temperature, wherein the second temperature is lower than the first temperature,
- Reacting the first exhaust gas stream in the first SCR-reactor such that a concentration of NOx in the first exhaust gas stream is reduced.

11. Method according to claims 10, wherein in the separating step a part discharged first from the internal combustion chambers is guided into the first component exhaust line (8) and a part discharged thereafter is guided into the second component exhaust line (9).

12. Method according to one of the claims 10 to 11 additionally comprising the step of: Heating the first exhaust gas stream upstream of the first SCR-reactor (10).

13. Method according to one of the claims 10 to 12, additionally comprising the step of:
- Guiding the second exhaust gas component stream through the second component exhaust line (9) to a second SCR reactor (12)
- Reacting the second exhaust gas component stream in the second SCR reactor (12).

14. Method according to one of the claims 10 to 13, wherein a reducing agent is injected upstream of the first SCR reactor (10) and/or the second SCR reactor (12).

## Patentansprüche

1. Verbrennungsmotor, vorzugsweise Zweitaktmotor (1), insbesondere für ein Antriebssystem, umfassend: mindestens zwei Zylinder (2), die jeweils eine Brennkammer (3) mit einem Einlass für einen Kraftstoff und einen Auslass (5) für ein Abgas mit einem Auslassventil (6) aufweisen, einen Abgassammler (11) zum Sammeln des Abgases der Zylinder (2), wobei der Motor mindestens eine Trennvorrichtung (7) stromabwärts der Brennkammern (3) aufweist, wobei die Trennvorrichtung (7) durch mehrere Ventile gebildet ist, wobei die Trennvorrichtung (7) vor oder nach einem Abgassammler angeordnet ist, wobei der Motor eine Steuereinheit aufweist, die zum Betreiben der Trennvorrichtung (7), nämlich zum Einstellen der Ventile, ausgebildet ist, wobei eine erste Teilabgasleitung (8) und eine zweite Teilabgasleitung (9) mit der mindestens einen Trennvorrichtung (7) verbunden sind, wobei die mindestens eine Trennvorrichtung (7) so ausgebildet ist, dass sie das Abgas aus den Brennkammern (3) in zwei Ströme trennt, nämlich einen ersten Teilabgasstrom für die erste Teilabgasleitung (8) und einen zweiten Teilabgasstrom für die zweite Teilabgasleitung (9), und wobei in der ersten Teilabgasleitung (8) stromabwärts der Trennvorrichtung (7) ein erster SCR-Reaktor (10) angeordnet ist, wobei die zweite Teilabgasleitung und die erste Teilabgasleitung (8, 9) zumindest bis zum ersten SCR-Reaktor (10) voneinander getrennt sind, **dadurch gekennzeichnet, dass** der erste SCR-Reaktor (10) eine maximale Kapazität von 80 % oder weniger, vorzugsweise 60 % oder 50 % oder weniger, einer Volllast-Ausströmungsrate der mindestens zwei Zylinder (2) aufweist, und wobei
während einer Ausstoßphase das Abgas einen Temperaturgradienten aufweist, weil eine Konzentration des Kombinationsgases anfänglich höher ist und mit der Zeit abnimmt, und wobei ein erster Abgasstrom, der während einer ersten Phase des Verbrennungszyklus ausgestoßen wird, eine erste Temperatur aufweist und ein zweiter Abgasstrom, der während der ersten Phase des Verbrennungszyklus ausgestoßen wird, eine zweite Temperatur aufweist, die niedriger ist als die erste Temperatur,
die Trennvorrichtung (7) so konfiguriert ist, dass sie einen Anteil des zuerst ausgestoßenen Abgases mit relativ mehr Verbrennungsgas und somit einer höheren Temperatur von einem später ausgestoßenen Anteil mit relativ mehr Spülluft und einer niedrigeren Temperatur trennt, wobei die Trennvorrichtung (7) so konfiguriert ist, dass sie den ersten Gasstrom durch zeitliches Steuern eines Öffnens und Schließens der Ventile für die erste Teilabgasleitung und die zweite Teilabgasleitung (8, 9) in Abhängigkeit von einer Temperatur des Abgases in den Zylindern (2), einem Kurbelwinkel, einer Zeit oder einem Druck in den Zylindern (2) trennt.

2. Verbrennungsmotor nach dem vorhergehenden Anspruch,
**dadurch gekennzeichnet, dass** die Trennvorrichtung (7) ein steuerbares Ventil, insbesondere eine Drosselklappe, zum Öffnen und Schließen der ersten Teilabgasleitung zum Trennen des Abgases in den ersten und zweiten Teilabgasstrom umfasst.

3. Verbrennungsmotor nach einem der vorhergehenden Ansprüche, **dadurch gekennzeichnet, dass** die mindestens eine Trennvorrichtung (7) stromaufwärts des Abgassammlers (11) angeordnet ist.

4. Verbrennungsmotor nach Anspruch 3, **dadurch gekennzeichnet, dass** die Trennvorrichtungen (7) durch das Auslassventil jedes der mindestens zwei Zylinder (2) gebildet werden.

5. Verbrennungsmotor nach einem der vorhergehenden Ansprüche, **dadurch gekennzeichnet, dass** der Motor (1) einen zweiten SCR-Reaktor (12) umfasst, der in der zweiten Teilabgasleitung (9), vorzugsweise stromabwärts der Abgasaufnahme (11), angeordnet ist.

6. Verbrennungsmotor nach Anspruch 5, **dadurch gekennzeichnet, dass** der zweite SCR-Reaktor (12) eine größere maximale Kapazität als der erste SCR-Reaktor (10) aufweist, vorzugsweise mindestens 80 % der Volllast-Ausströmungsrate der mindestens zwei Zylinder (2).

7. Verbrennungsmotor nach einem der vorhergehenden Ansprüche, **dadurch gekennzeichnet, dass** die zweite Teilabgasleitung eine SCR-Leitung (13) und eine Bypass-Leitung (14) umfasst, wobei der zweite SCR (12) in der SCR-Leitung angeordnet ist und wobei die zweite Teilabgasleitung mindestens ein, vorzugsweise zwei, Ventile (15) zum Leiten des Abgases in den zweiten SCR (12) und/oder die Bypass-Leitung (14) umfasst.

8. Verbrennungsmotor nach einem der vorhergehenden Ansprüche, **dadurch gekennzeichnet, dass** die erste Teilabgasleitung (8) ein Heizelement (16) umfasst, das stromaufwärts des ersten und/oder zweiten SCR-Reaktors (10, 12) angeordnet ist.

9. Verbrennungsmotor nach einem der vorhergehenden Ansprüche, wobei stromaufwärts des ersten SCR-Reaktors und/oder des zweiten SCR-Reaktors eine Vorrichtung zum Einspritzen eines Reduktionsmittels, wie einer Harnstofflösung, angeordnet ist.

10. Verfahren zur Reduktion von NOₓ-Emissionen einem Verbrennungsmotor vorzugsweise einem Verbrennungsmotor nach einem der Ansprüche 1 bis 9, umfassend die Schritte:
- Verbrennen eines Kraftstoffs in mindestens zwei Zylindern (2) mit einer Brennkammer (3) mit einem Einlass für einen Kraftstoff und einem Auslass (5) für ein Abgas mit einem Auslassventil (6)
- Ausstoßen von Abgas durch den Auslass (5)
- Trennen des Abgases aller Brennkammern (3) stromabwärts der Brennkammern (3) in einen ersten und einen zweiten Abgasstrom mit einer Trennvorrichtung (7), die durch mehrere vor oder nach einem Abgassammler angeordnete Ventile gebildet ist, wobei der erste Abgasstrom durch eine erste Teilabgasleitung (8) transportiert wird, wobei der erste Abgasstrom durch eine erste Teilabgasleitung (8) und der zweite Teilabgasstrom durch eine zweite Teilabgasleitung (9) transportiert wird, und wobei beide Abgasleitungen (8, 9) mit der mindestens einen Trennvorrichtung (7) verbunden sind, indem ein Öffnen und Schließen der Ventile für die erste Teilabgasleitung und die zweite Teilabgasleitung (8, 9) zeitlich gesteuert wird, abhängig von der Temperatur des Abgases in den Zylindern (2), dem Kurbelwinkel, einer Zeit oder einem Druck in den Zylindern (2),
- Leiten des ersten Abgasstroms in der ersten Teilabgasleitung (8) zu einem ersten SCR-Reaktor (10) mit einer maximalen Kapazität von 80 % oder weniger, vorzugsweise 60 % oder 50 % oder weniger, einer Volllast-Ausströmungsrate der mindestens zwei Zylinder,
- Führen des zweiten Abgasstroms in der zweiten Teilabgasleitung (9), wobei die erste und die zweite Abgasleitung zumindest bis zum ersten SCR-Reaktor (10) getrennt gehalten werden, wobei der erste Abgasstrom eine erste Temperatur und der zweite Abgasstrom eine zweite Temperatur aufweist, wobei die zweite Temperatur niedriger als die erste Temperatur ist,
- Reagieren des ersten Abgasstroms in dem ersten SCR-Reaktor, so dass eine Konzentration von NOx in dem ersten Abgasstrom reduziert wird.

11. Verfahren nach Anspruch 10, wobei im Trennschritt ein zuerst aus den Brennkammern abgeführter Anteil in die erste Teilabgasleitung (8) und ein danach abgeführter Anteil in die zweite Teilabgasleitung (9) geleitet wird.

12. Verfahren nach einem der Ansprüche 10 bis 11, zusätzlich umfassend den Schritt: Aufheizen des ersten Abgasstroms vor dem ersten SCR-Reaktor (10).

13. Verfahren nach einem der Ansprüche 10 bis 12, das zusätzlich den Schritt umfasst:
- Führen des zweiten Abgasteilstroms durch die zweite Teilabgasleitung (9) zu einem zweiten SCR-Reaktor (12)
- Reagieren des zweiten Abgasteilstroms in dem zweiten SCR-Reaktor (12).

14. Verfahren nach einem der Ansprüche 10 bis 13, wobei stromaufwärts des ersten SCR-Reaktors (10) und/oder des zweiten SCR-Reaktors (12) ein Reduktionsmittel eingespritzt wird.

## Revendications

1. Moteur à combustion interne, de préférence à deux temps (1), en particulier pour un système de propulsion, comprenant : au moins deux cylindres (2), chacun comprenant une chambre de combustion (3) ayant une entrée pour un carburant et une sortie (5) pour un gaz d'échappement avec une soupape de sortie (6), un récepteur de gaz d'échappement (11) pour collecter le gaz d'échappement des cylindres (2), dans lequel le moteur comprend au moins un dispositif de séparation (7) en aval des chambres de combustion (3), le dispositif de séparation (7) étant formé par des soupapes multiples, le dispositif de séparation (7) est disposé avant ou après un récepteur de gaz d'échappement, dans lequel le moteur comprend une unité de commande configurée pour faire fonctionner le dispositif de séparation (7), notamment pour régler les soupapes, dans lequel une première ligne d'échappement de composant (8) et une deuxième ligne d'échappement de composant (9) sont reliées à l'au moins un dispositif de séparation (7), dans lequel l'au moins un dispositif de séparation (7) est configuré pour séparer les gaz d'échappement des chambres de combustion (3) en deux flux, à savoir un premier flux de gaz pour la ligne d'échappement du premier composant (8) et un second flux de gaz pour la ligne d'échappement du second composant (9) et dans lequel un premier réacteur SCR (10) est disposé dans la ligne d'échappement du premier composant (8) en aval du dispositif de séparation (7), la ligne d'échappement du second composant et les lignes d'échappement du premier composant (8, 9) sont séparées l'une de l'autre au niveau de la ligne d'échappement du premier composant (9), 9) sont séparées l'une de l'autre au moins jusqu'au premier réacteur SCR (10), **caractérisé en ce que** le premier réacteur SCR (10) a une capacité maximale de 80 % ou moins, de préférence 60 % ou 50 % ou moins, d'un débit de sortie à pleine charge des au moins deux cylindres (2), et dans lequel
pendant la phase d'évacuation, les gaz d'échappement présentent un gradient de température parce que la concentration du gaz de combustion est initialement plus élevée et diminue avec le temps, et qu'un premier flux de gaz d'échappement évacué pendant une première phase du cycle de combustion a une première température et qu'un second flux de gaz d'échappement évacué pendant la première phase du cycle de combustion a une seconde température, qui est inférieure à la première température,
le dispositif de séparation (7) est configuré pour séparer une partie des gaz d'échappement évacués en premier avec relativement plus de gaz de combustion et donc une température plus élevée, d'une partie évacuée plus tard avec relativement plus d'air de balayage et une température plus basse, le dispositif de séparation (7) étant configuré pour séparer le premier flux de gaz en synchronisant l'ouverture et la fermeture des soupapes pour le premier composant et les lignes d'échappement du second composant (8, 9), en fonction d'une température des gaz d'échappement dans les cylindres (2), d'un angle de manivelle, d'un temps ou d'une pression dans les cylindres (2).

2. Moteur à combustion interne selon la revendication précédente, **caractérisé en ce que** le dispositif de séparation (7) comprend une vanne commandable, en particulier une vanne papillon, pour ouvrir et fermer la conduite d'échappement du premier composant afin de séparer le gaz d'échappement en un flux d'échappement du premier et du deuxième composant.

3. Moteur à combustion interne selon l'une des revendications précédentes, **caractérisé en ce que** le au moins un dispositif de séparation (7) est disposé en amont du récepteur de gaz d'échappement (11).

4. Moteur à combustion interne selon la revendication 3, **caractérisé en ce que**, les dispositifs de séparation (7), sont formés par la soupape de sortie de chacun des au moins deux cylindres (2).

5. Moteur à combustion interne selon l'une des revendications précédentes, **caractérisé en ce que** le moteur (1) comprend un deuxième réacteur SCR (12), qui est disposé dans la ligne d'échappement du deuxième composant (9), de préférence en aval du récepteur de gaz d'échappement (11).

6. Moteur à combustion interne selon la revendication 5, **caractérisé en ce que** le deuxième SCR (12) a une capacité maximale supérieure à celle du premier SCR (10), de préférence au moins 80 % du débit de sortie à pleine charge des au moins deux cylindres (2).

7. Moteur à combustion interne selon l'une des revendications précédentes, **caractérisé en ce que**, la deuxième ligne d'échappement composante comprend un tuyau SCR (13) et un tuyau de dérivation (14), dans lequel le deuxième SCR (12) est disposé dans le tuyau SCR et dans lequel la deuxième ligne d'échappement composante comprend au moins une, de préférence deux, vannes (15) pour guider les gaz d'échappement dans le deuxième SCR (12) et/ou le tuyau de dérivation (14) .

8. Moteur à combustion interne selon l'une des revendications précédentes, **caractérisé en ce que**, la ligne d'échappement du premier composant (8) comprend un élément chauffant (16) disposé en amont du premier et/ou du second réacteur SCR (10,12).

9. Moteur à combustion interne selon l'une des revendications précédentes, dans lequel un dispositif d'injection d'un agent réducteur, tel qu'une solution d'urée, est disposé en amont du premier réacteur SCR et/ou du deuxième réacteur SCR.

10. Procédé de réduction des émissions de NOx d'un moteur à combustion interne, de préférence un moteur à combustion selon l'une quelconque des revendications 1 à 9, comprenant les étapes de :
- Brûler un carburant dans au moins deux cylindres (2) ayant une chambre de combustion interne (3) avec une entrée pour un carburant et une sortie (5) pour un gaz d'échappement avec une vanne de sortie (6).
- évacuer les gaz d'échappement par la sortie (5)
- Séparation des gaz d'échappement de toutes les chambres de combustion (3) en aval des chambres de combustion (3) en un premier et un second flux de gaz d'échappement à l'aide d'un dispositif de séparation (7), formé par de multiples soupapes disposées avant ou après un récepteur de gaz d'échappement, le premier flux de gaz d'échappement étant transporté par une première conduite d'échappement com-posante (8), et le second flux de gaz d'échappement est transporté par une ligne d'échappement à second composant (9), et dans lequel les deux lignes d'échappement (8, 9) sont reliées à au moins un dispositif de séparation (7) en synchronisant l'ouverture et la fermeture des soupapes pour les lignes d'échappement à premier composant et à second composant (8, 9), en fonction de la température des gaz d'échappement dans les cylindres (2), de l'angle de la manivelle, d'un temps ou d'une pression dans les cylindres (2),
- Diriger le premier flux de gaz d'échappement dans la première ligne d'échappement des composants (8) vers un premier réacteur SCR (10) d'une capacité maximale de 80 % ou moins, de préférence 60 % ou 50 % ou moins, d'un débit de sortie à pleine charge des deux cylindres au moins,
- guider le deuxième flux de gaz d'échappement dans la deuxième ligne d'échappement (9), la première et la deuxième ligne d'échappement étant séparées au moins jusqu'au premier réacteur SCR (10), le premier flux de gaz d'échappement ayant une première température et le deuxième flux de gaz d'échappement ayant une deuxième température, la deuxième température étant inférieure à la première,
- Réaction du premier flux de gaz d'échappement dans le premier réacteur SCR de manière à réduire la concentration de NOx dans le premier flux de gaz d'échappement.

11. Procédé selon les revendications 10, dans lequel, lors de l'étape de séparation, une partie déchargée en premier des chambres de combustion interne est guidée dans la ligne d'échappement du premier composant (8) et une partie déchargée ensuite est guidée dans la ligne d'échappement du deuxième composant (9).

12. Procédé selon l'une des revendications 10 à 11 comprenant additivement l'étape de : Chauffer le premier flux de gaz d'échappement en amont du premier réacteur SCR (10).

13. Procédé selon l'une des revendications 10 à 12, comprenant additionnellement l'étape de :
- Acheminer le deuxième flux de gaz d'échappement à travers la ligne d'échappement du deuxième composant (9) jusqu'à un deuxième réacteur SCR (12)
- réaction du deuxième flux de gaz d'échappement dans le deuxième réacteur SCR (12).

14. Procédé selon l'une des revendications 10 à 13, dans lequel un agent réducteur est injecté en amont du premier réacteur SCR (10) et/ou du second réacteur SCR (12).
